# FASCICULE DE BREVET EUROPEEN

(11) **EP 4 347 293 B1**
(45) Date de publication et mention de la délivrance du brevet: **18.02.2026**
(21) Numéro de dépôt: 22735530.2
(22) Date de dépôt: 26.04.2022
(51) Int. Cl.: B60K 11/04, B60K 11/08

(54) **DISPOSITIF DE RÉGULATION PILOTÉE DU FLUX D'AIR ENTRANT D'UN VÉHICULE OPTIMISÉ POUR CHOC RÉPARABILITÉ**
FÜR DIE AUFPRALLREPARATUR OPTIMIERTE VORRICHTUNG ZUR GESTEUERTEN REGELUNG DES IN EIN FAHRZEUG STRÖMENDEN LUFTSTROMS
DEVICE FOR CONTROLLED REGULATION OF THE FLOW OF AIR ENTERING A VEHICLE OPTIMISED FOR IMPACT REPARABILITY

(30) Priorité: 31.05.2021 FR 2105686
(43) Date de publication de la demande: 10.04.2024
(73) Titulaire: Stellantis Auto SAS, 78300 Poissy (FR)
(72) Inventeur: JEANNEAU, Clement, 92100 BOULOGNE BILLANCOURT (FR); LAMOURIC, Stephane, 78280 GUYANCOURT (FR)
(74) Mandataire: BCIP
(86) Numéro de dépôt international: PCT/FR2022/050785
(87) Numéro de publication internationale: WO 2022/254110

(56) Documents cités:
- EP-A1- 1 522 448
- EP-A1- 3 552 887
- DE-A1- 102010 060 253
- DE-A1- 102014 001 927
- FR-A1- 3 006 248
- FR-A1- 3 075 115
- JP-B2- 6 247 972
- US-A1- 2019 023 122

## Description

### [Domaine technique]

La présente invention revendique la priorité de la demande française 2105686 déposée le 31 mai 2021.

La présente invention concerne un dispositif de régulation pilotée du flux d'air entrant destiné à être monté dans à l'avant du compartiment moteur d'un véhicule automobile pour refroidir le liquide de refroidissement circulant dans le moteur thermique de ce véhicule.

### [Technique antérieure]

La régulation du flux d'air entrant de refroidissement d'un véhicule automobile est généralement assurée par une première entrée d'air dite voie basse s'étendant en hauteur entre les poutres des renforts inférieur et supérieur de pare-chocs avant du véhicule, ainsi que par une seconde entrée d'air dite voie haute s'étendant au-dessus de la poutre du renfort supérieur de pare-chocs avant de ce véhicule.

Ainsi, lorsque le véhicule se déplace, une quantité d'air plus ou moins frais est reçue à l'intérieur du compartiment moteur par la cassette de refroidissement portant le groupe moto-ventilateur afin de refroidir certains organes implantés sous le capot du véhicule tels que le moteur et/ou le système de climatisation de l'habitacle.

La quantité d'air pénétrant dans ces conditions dépend directement de la vitesse du véhicule et des dimensions des ajours d'entrée d'air de la calandre ainsi que de la puissance du ou des ventilateurs du groupe moto-ventilateur, lorsque ces derniers sont en fonctionnement.

Cependant, ces ajours sont de dimensions fixes de sorte que les débits et températures d'air de refroidissement ne sont pas maîtrisables car ils sont directement liés à la vitesse de déplacement du véhicule et à la température de l'air extérieur. Par conséquent, les organes du compartiment moteur du véhicule situés sous le capot de celui-ci peuvent être excessivement refroidis dans certaines conditions, notamment en hiver, lorsque la température extérieure est faible.

En outre, cet air entrant dans le véhicule via la calandre a pour effet de dégrader le coefficient de traînée aérodynamique SCx du véhicule (ce coefficient correspondant au coefficient de traînée (Cx) multiplié par une surface (S) de référence) et d'augmenter en conséquence les émissions de CO2 du véhicule.

Il est également connu, du document FR 3 006 248 A1, d'intercaler longitudinalement, entre d'une part les poutres des renforts inférieur et supérieur de pare-chocs et d'autre part la cassette de refroidissement d'un véhicule automobile, un dispositif de régulation pilotée du flux d'air entrant de refroidissement comportant comportant un cadre périphérique de forme rectangulaire délimité par une traverse supérieure, une traverse inférieure et deux montants latéraux, ainsi qu'au moins un module de régulation supporté par ledit cadre périphérique et prévu pour être agencé verticalement entre les dites poutres en regard de l'entrée d'air voie basse du véhicule.

Un autre exemple de dispositif de régulation pilotée du flux d'air entrant de refroidissement pour véhicule automobile est aussi connu du document JP6247972B2.

De tels modules de régulation comprennent une pluralité de volets montés pivotant autour d'axes parallèles entre une position d'obturation et une position d'ouverture ainsi que des moyens de commande du déplacement desdits volets entre ces deux positions, de sorte à réguler le débité d'air entrant.

Parmi les nombreux protocoles de choc que subissent les différentes modèles de véhicules automobiles avant leur commercialisation, l'un d'entre eux désigné sous l'appellation « choc réparabilité » consiste à estimer le coût des réparations sur le véhicule testé, lorsque ce dernier percute frontalement, par son côté avant gauche et à une vitesse de 16 km/h, un mur rigide incliné selon un angle de 10° par rapport à un plan transversal à l'axe de ce véhicule avec 40 % de recouvrement.

La réalisation d'un tel « choc réparabilité » permet ainsi aux sociétés d'assurance de répertorier les différents modèles de véhicule testés dans différentes classes en fonction du coût des réparations, et d'adapter leurs tarifs en conséquence.

Lors de la réalisation de ce « choc réparabilité » sur certains véhicules équipés d'un dispositif de régulation pilotée du flux d'air entrant de refroidissement, la poutre du renfort inférieur de pare-choc avant du véhicule vient impacter du fait de sa déformation la partie inférieure gauche de ce dispositif de régulation qui est entrainé vers l'arrière.

En reculant, ce dispositif de régulation a tendance a venir impacter la traverse inférieure de soutènement supportant la cassette de refroidissement portant le groupe moto-ventilateur et s'étendant entre les deux prolonges latérales de berceau de la structure de ce véhicule.

En effet, bien que cette traverse inférieure de soutènement soit agencée traditionnellement à un niveau situé légèrement en dessous de la face inférieure du cadre périphérique du dispositif de régulation, les effets du choc provoquent le vrillage élastique de la portion latérale d'extrémité correspondante de cette traverse de soutènement autour de son axe transversal qui vient saillir temporairement au-dessus du niveau de la face inférieure de ce cadre périphérique.

Cette portion latérale d'extrémité de la traverse de soutènement se trouve ainsi emportée par le recul du dispositif de régulation pilotée ce qui entraine sa torsion au-delà de ses limites élastiques et nécessite donc son remplacement.

### [Exposé de l'invention]

La présente invention vise donc à éviter la détérioration de cette traverse inférieure de soutènement, de sorte à limiter les coûts de réparation d'un tel choc réparabilité et à obtenir un meilleur classement du véhicule auprès des assurances.

Elle propose à cet effet un dispositif de régulation pilotée du flux d'air entrant de refroidissement pour véhicule automobile, destiné à être intercalé longitudinalement entre d'une part les poutres des renforts inférieur et supérieur de pare-chocs et d'autre part la cassette de refroidissement dudit véhicule, ledit dispositif comportant un cadre périphérique de forme rectangulaire délimité par une traverse supérieure, une traverse inférieure et deux montants latéraux, ainsi qu'au moins un module de régulation supporté par ledit cadre périphérique et prévu pour être agencé verticalement entre les dites poutres en regard de l'entrée d'air voie basse du véhicule, ledit module de régulation comprenant une pluralité de volets montés pivotant autour d'axes parallèles entre une position d'obturation et une position d'ouverture ainsi que des moyens de commande du déplacement desdits volets entre ces deux positions ; caractérisé en ce que au moins l'un des coins inférieurs dudit cadre périphérique est biseauté selon un plan incliné formant un angle d'inclinaison qui est compris entre 10 et 30°avec la face inférieure de ladite traverse inférieure, le au moins dit coin biseauté étant configuré de sorte que le bord inférieur du montant latéral correspondant soit décalé verticalement vis-à-vis de la face inférieure de ladite traverse inférieure d'un écartement compris entre 5 et 20 millimètres.

La présence d'un tel coin biseauté permet d'éviter, lors de la réalisation d'un choc réparabilité sur le côté correspondant du véhicule, que la portion latérale d'extrémité correspondante de la traverse inférieure de soutènement vrillant élastiquement autour de son axe ne soit emportée vers l'arrière par le cadre périphérique du dispositif de régulation dans sa course de recul.

L'invention permet ainsi de limiter les coûts de réparation d'un tel choc réparabilité et d'obtenir un meilleur classement du véhicule auprès des assurances.

Selon des caractéristiques préférées dudit dispositif selon l'invention :
- ledit écartement est compris entre 10 et 15 millimètres ;
- ledit angle d'inclinaison est compris entre 10 et 20° ;
- les deux coins inférieurs dudit cadre périphérique sont biseautés ;
- ledit dispositif comporte un autre module de régulation supporté par ledit cadre périphérique et prévu pour être agencé verticalement au dessus de la poutre du renfort supérieur de pare-chocs en regard de l'entrée d'air voie haute du véhicule ;
- ledit cadre périphérique comprend une paroi de fond s'étendant latéralement entre les bords arrière desdits montants latéraux et verticalement entre lesdits modules ; et/ou
- ledit cadre périphérique est venu de moulage d'une seule pièce à partir d'un matériau thermoplastique éventuellement renforcé en fibres naturelles et/ou synthétiques.

L'invention vise également sous un second aspect, un véhicule automobile comportant une poutre de renfort inférieur de pare-chocs s'étendant au devant de deux prolonges latérales de berceau, une poutre de renfort supérieur de pare-chocs s'étendant au-devant de deux brancards latéraux, une cassette de refroidissement supportée par une traverse inférieure de soutènement s'étendant entre lesdites prolonges latérales de berceau, et un tel dispositif de régulation pilotée du flux d'air entrant de refroidissement intercalé longitudinalement entre lesdites poutres et ladite cassette de refroidissement.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue en perspective de trois quart avant de la partie avant du compartiment moteur d'un véhicule automobile comportant un dispositif de régulation pilotée du flux d'air entrant de refroidissement selon l'invention ;
[Fig 2] est un agrandissement en perspective du coin inférieur gauche du dispositif de régulation pilotée du flux d'air entrant de refroidissement selon l'invention ; et
[Fig 3] représente un agrandissement en perspective dans son environnement du coin inférieur gauche du dispositif de régulation pilotée du flux d'air entrant de refroidissement selon l'invention après la réalisation d'un choc réparabilité.

### [Description détaillée]

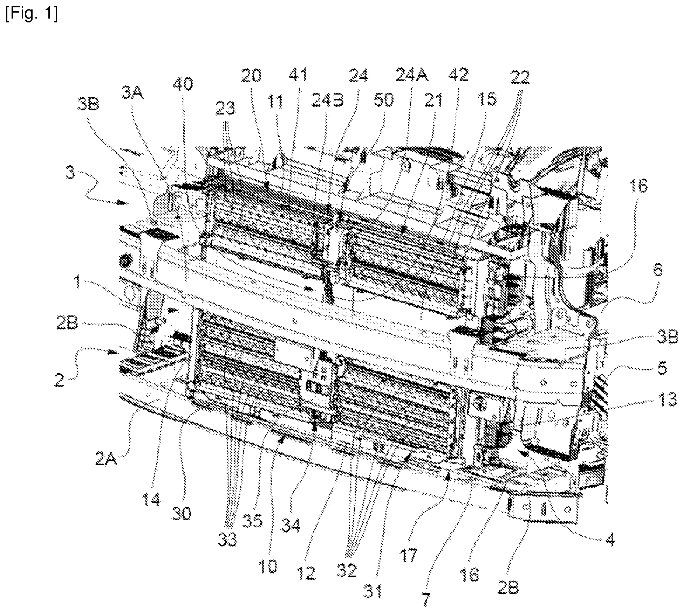

La figure 1 représente la partie avant du compartiment moteur d'un véhicule automobile comportant un dispositif de régulation pilotée du flux d'air entrant de refroidissement 1 selon l'invention intercalé longitudinalement entre les poutres métalliques 2A, 3A des renforts inférieur 2 et supérieur 3 de pare-chocs avant du véhicule et la cassette de refroidissement 4 portant le groupe moto-ventilateur de ce même véhicule.

Dans la description qui va suivre et par convention, les termes « avant », « arrière », « inférieur », « supérieur » « horizontal », « vertical » et « transversal » seront définis par rapport à la position de montage de ce dispositif 1 sur le véhicule.

Les termes « externe » et « interne » seront quant à eux utilisés pour définir la position relative d'un élément par référence à l'axe longitudinal du véhicule. L'élément le plus proche de cet axe sera ainsi qualifié d'interne par opposition à l'autre élément plus éloigné de ce même axe qui sera quant à lui qualifié d'externe.

Le renfort inférieur de pare-chocs avant 2 comporte, outre la poutre 2A, deux absorbeurs métalliques latéraux 2B solidaires chacun d'une portion d'extrémité latérale correspondante de cette poutre 2A et fixés aux extrémités avant des deux prolonges latérales de berceau 5 de la structure du véhicule.

Le renfort supérieur de pare-chocs avant 3 comporte quant à lui, outre la poutre 3A, deux absorbeurs métalliques latéraux 3B solidaires chacun d'une portion d'extrémité latérale correspondante de cette poutre 3A et fixés aux extrémités avant des deux brancards avant 6 de la structure du véhicule.

La cassette de refroidissement 4 est supportée par une traverse métallique inférieure de soutènement 7 s'étendant selon un plan horizontal entre les deux prolonges latérales de berceau 5.

Le dispositif de régulation pilotée du flux d'air entrant de refroidissement 1 comporte un cadre périphérique rectangulaire 10, ainsi que deux modules de régulation 20, 30 saillant au-devant de ce cadre périphérique 10 et supportés par celui-ci.

Venu de moulage d'une seule pièce à partir d'un matériau thermoplastique éventuellement renforcé en fibres naturelles et/ou synthétiques, le cadre périphérique rectangulaire 10 est délimité par une traverse supérieure 11, une traverse inférieure 12, un montant latéral gauche 13 et un montant latéral droit 14.

Le cadre périphérique 10 comprend également une paroi de fond 15 s'étendant latéralement entre les bords arrière des montants latéraux13, 14 et verticalement entre les deux modules de régulation 20, 30.

Par ailleurs, ce cadre périphérique 10 est fixé sur la façade avant de la cassette de refroidissement 4 par l'intermédiaire de quatre pattes de liaison 16 saillant latéralement du côté externe depuis les portions supérieure et inférieure des deux montants latéraux gauche 13 et droite 14.

Agencé verticalement entre les poutres 2A, 3A des renforts inférieur de pare-chocs avant 2, 3 en regard de l'entrée d'air voie basse du véhicule, le module de régulation 20 comprend un casier 21 de forme rectangulaire délimitant deux cases latérales de largeurs identiques s'étendant symétriquement de part et d'autre d'une case centrale de plus faible largeur.

Ce module 20 comprend également :
- trois volets 22 agencés dans la case latérale gauche du casier 21 les uns au-dessus des autres et montés pivotants autour de leurs axes orientés transversalement, entre une position de fermeture sensiblement verticale illustrée par la figure 1 et une position d'ouverture sensiblement horizontale non représentée ; et
- trois volets 23 agencés dans la case latérale droite du casier 21 les uns au-dessus des autres de manière symétrique par rapport aux volets 22 et montés pivotants autour de leurs axes orientés transversalement, entre une position de fermeture sensiblement verticale illustrée par la figure 1 et une position d'ouverture sensiblement horizontale non représentée.

Ce module de régulation 20 comporte en outre un mécanisme de commande 24 implanté au niveau de la case centrale 21C, au-devant des extrémités internes des volets 22, 23.

Ce mécanisme de commande 24 comporte une bielle 24A articulée aux trois volets 22 selon des axes transversaux décalés vis-à-vis de leurs axes de pivotement, de sorte à les rendre solidaire en rotation les uns des autres, ainsi qu'une bielle 24B articulée aux trois volets 23 selon des axes transversaux décalés vis-à-vis de leurs axes de pivotement, de sorte à les rendre solidaire en rotation les uns des autres.

De conception similaire au module de régulation 20 et agencé verticalement au dessus de la poutre 3A du renfort supérieur de pare-chocs avant 3 en regard de l'entrée d'air voie haute du véhicule, le module de régulation 30 comprend un casier 31 de forme rectangulaire délimitant deux cases latérales de largeurs identiques s'étendant symétriquement de part et d'autre d'une case centrale de plus faible largeur.

Ce module de régulation 30 comprend également :
- cinq volets 32 agencés dans la case latérale gauche du casier 31 les uns au-dessus des autres et montés pivotants autour de leurs axes orientés transversalement, entre une position de fermeture sensiblement verticale illustrée par la figure 1 et une position d'ouverture sensiblement horizontale non représentée ; et
- cinq volets 33 agencés dans la case latérale droite du casier 31 les uns au-dessus des autres de manière symétrique par rapport aux volets 32 et montés pivotants autour de leurs axes orientés transversalement, entre une position de fermeture sensiblement verticale illustrée par la figure 1 et une position d'ouverture sensiblement horizontale non représentée.

Ce module de régulation 30 comporte en outre un mécanisme de commande 34 implanté au niveau de la case centrale.

Le mécanisme de commande 34 comprend un organe de liaison 35 implanté au-devant des extrémités internes des volets 32, 33 et articulé à pivotement avec l'ensemble des volets 32, 33 de sorte à ce que ces derniers soient solidaires en rotation.

Tel qu'illustré sur la figure 1, le dispositif de régulation pilotée 1 comporte également une tringle de connexion 40 en forme de T reliant l'un à l'autre les mécanismes de commande 24, 34.

Cette tringle 40 se compose d'une tête 41 articulée au mécanisme de commande 24, d'un pied (non visible) articulé au mécanisme de commande 34, et d'un jambage 42 s'étendant verticalement entre la tête 41 et le pied.

La tête 41 s'étend transversalement au-devant des deux bielles 24A, 24B du mécanisme de commande 24 et ses deux extrémités latérales sont montées articulées à pivotement selon un même axe transversal sur ces deux bielles 24A, 24B, de sorte à ce que l'ensemble des volets 22, 23 du module de régulation 20 soient solidaires en rotation.

Le dispositif de régulation pilotée 1 comporte enfin un actionneur 50 logé dans la dans la case centrale 21C du module de régulation 20.

Cet actionneur 50 comprend un boîtier logeant un moteur électrique (non représenté et par exemple de type pas à pas ou à courant continu) doté d'un arbre rotatif creux dans lequel est insérée par correspondance de forme l'extrémité interne d'un volet 22 du module de régulation 20 traversant ledit boîtier 51, de sorte que ce volet 22 soit solidaire en rotation avec cet arbre.

Les volets 22, 23 du module de régulation 20 étant solidaires en rotation par l'intermédiaire du mécanisme de commande 24, on comprend que la rotation de l'arbre dans un sens ou dans l'autre entraine la rotation de ces volets 22, 23 d'une position d'ouverture vers une position de fermeture ou inversement.

Du fait de la présence de la tringle de connexion 40 reliant les mécanismes de commande 24, 34, la rotation de l'arbre dans un sens ou dans l'autre va entrainer également la rotation des volets 32, 33 du module de régulation 20 d'une position d'ouverture vers une position de fermeture ou inversement.

En référence aux figures 1 à 3 et selon l'invention, on peut remarquer que le coin inférieur gauche 17 du cadre périphérique 10 est biseauté selon un plan incliné formant un angle d'inclinaison θ avec la face inférieure horizontale de la traverse inférieure 12.

Cet angle θ est compris de préférence entre 10 et 30° et avantageusement entre 10 et 20°.

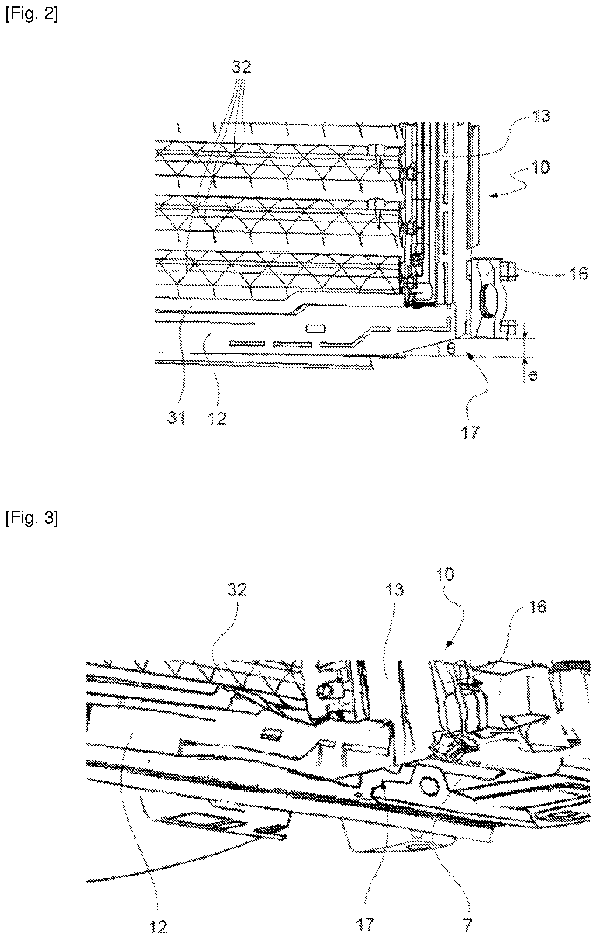

Comme on peut le remarquer sur la figure 3, ce coin biseauté 17 permet d'éviter, lors de la réalisation d'un choc réparabilité, que la portion latérale d'extrémité gauche de la traverse inférieure de soutènement 7 vrillant élastiquement autour de son axe ne soit emportée vers l'arrière par le cadre périphérique 10 du dispositif de régulation 1 dans sa course de recul.

Ce coin biseauté 17 est configuré de sorte que le bord inférieur du montant latéral correspondant 13 soit décalé verticalement vis-à-vis de la face inférieure de la traverse inférieure 12 d'un écartement e compris de préférence entre 5 et 20 millimètres et avantageusement entre 10 et 15 millimètres, de sorte à limiter la fragilisation du cadre périphérique 10 au niveau de ce coin 17.

Selon des variantes de réalisation non représentées, le coin inférieur droit du cadre périphérique du dispositif de régulation pilotée peut également être biseauté de manière similaire au coin inférieur gauche.

Selon d'autres variantes de réalisation non représentées, seul le coin inférieur droit du cadre périphérique peut être biseauté.

Selon encore d'autres variantes de réalisation non représentées, les moyens de commande de chaque module de régulation peut varier, de même que le nombre de volets qu'il comporte.

Le dispositif de régulation pilotée peut également ne comporter qu'un unique module de régulation agencé en dessus de la poutre du renfort supérieur de pare-chocs avant en regard de l'entrée d'air voie basse du véhicule.

## Revendications

1. Dispositif de régulation pilotée du flux d'air entrant de refroidissement (1) pour véhicule automobile, destiné à être intercalé longitudinalement entre d'une part les poutres (2A, 3A) des renforts inférieur (2) et supérieur (3) de pare-chocs et d'autre part la cassette de refroidissement (4) dudit véhicule, ledit dispositif (1) comportant un cadre périphérique de forme rectangulaire (10) délimité par une traverse supérieure (11), une traverse inférieure (12) et deux montants latéraux (13, 14), ainsi qu'au moins un module de régulation (30) supporté par ledit cadre périphérique (10) et prévu pour être agencé verticalement entre lesdites poutres (2A, 3A) en regard de l'entrée d'air voie basse du véhicule, le au moins dit module de régulation (30) comprenant une pluralité de volets (32, 33) montés pivotant autour d'axes parallèles entre une position d'obturation et une position d'ouverture ainsi que des moyens de commande (34) du déplacement desdits volets (32, 33) entre ces deux positions ;
**caractérisé en ce que** au moins l'un (17) des coins inférieurs dudit cadre périphérique (10) est biseauté selon un plan incliné formant un angle d'inclinaison (θ) qui est compris entre 10 et 30°avec la face inférieure de ladite traverse inférieure (12), le au moins dit coin biseauté (17) étant configuré de sorte que le bord inférieur du montant latéral correspondant (13) soit décalé verticalement vis-à-vis de la face inférieure de ladite traverse inférieure (12) d'un écartement (e) compris entre 5 et 20 millimètres.

2. Dispositif selon la revendication 1, **caractérisé en ce que** ledit écartement (e) est compris entre 10 et 15 millimètres.

3. Dispositif selon l'une des revendications 1 ou 2, **caractérisé en ce que** ledit angle d'inclinaison (θ) est compris entre 10 et 20°.

4. Dispositif selon l'une des revendications 1 à 3,
**caractérisé en ce que** les deux coins inférieurs (17) dudit cadre périphérique (10) sont biseautés.

5. Dispositif selon l'une des revendications 1 à 4,
**caractérisé en ce qu'**il comporte un autre module de régulation (20) supporté par ledit cadre périphérique (10) et prévu pour être agencé verticalement au-dessus de la poutre (3A) du renfort supérieur (3) de pare-chocs en regard de l'entrée d'air voie haute du véhicule.

6. Dispositif selon la revendication 5, **caractérisé en ce que** ledit cadre périphérique (10) comprend une paroi de fond (15) s'étendant latéralement entre les bords arrière desdits montants latéraux (13, 14) et verticalement entre lesdits modules (20, 30).

7. Dispositif selon l'une des revendications 1 à 6,
**caractérisé en ce que** ledit cadre périphérique (10) est venu de moulage d'une seule pièce à partir d'un matériau thermoplastique éventuellement renforcé en fibres naturelles et/ou synthétiques.

8. Véhicule automobile comportant une poutre (2A) de renfort inférieur (2) de pare-chocs s'étendant au-devant de deux prolonges latérales de berceau (5), une poutre (3A) de renfort supérieur (3) de pare-chocs s'étendant au-devant de deux brancards latéraux (6), une cassette de refroidissement (4) supportée par une traverse inférieure de soutènement (7) s'étendant entre lesdites prolonges latérales de berceau (5), et un dispositif de régulation pilotée du flux d'air entrant de refroidissement (1) intercalé longitudinalement entre lesdites poutres (2A, 3A) et ladite cassette de refroidissement (7) ; **caractérisé en ce que** ledit dispositif de régulation pilotée du flux d'air entrant de refroidissement (1) est conforme à l'une des revendications 1 à 7.

## Patentansprüche

1. Steuerbare Steuervorrichtung für den Kühleinlassluftstrom (1) für ein Kraftfahrzeug, die dazu bestimmt ist, in Längsrichtung zwischen den Trägern (2A, 3A) der unteren (2) und oberen (3) Stoßfängerverstärkung und der Kühlkassette (4) des Fahrzeugs angeordnet zu werden, wobei die Vorrichtung (1) einen rechteckigen Umfangsrahmen (10) aufweist, der durch eine obere Traverse (11), eine untere Traverse (12) und zwei Seitenstützen (13, 14) begrenzt ist, sowie mindestens ein Steuermodul (30), der von dem Umfangsrahmen (10) getragen wird und dazu bestimmt ist, vertikal zwischen den Balken (2A, 3A) gegenüber dem Lufteinlass des unteren Gleises des Fahrzeugs angeordnet zu werden, wobei das mindestens eine Regelmodul (30) eine Vielzahl von Klappen (32, 33), die um parallele Achsen zwischen einer Verschlussposition und einer Öffnungsposition schwenkbar angebracht sind, sowie Steuermittel (34) für die Bewegung der Klappen (32, 33) zwischen diesen beiden Positionen umfasst ; **dadurch gekennzeichnet, dass** wenigstens eine (17) der unteren Ecken des Umfangsrahmens (10) in einer geneigten Ebene abgeschrägt ist, die einen Neigungswinkel (θ) bildet, der zwischen 10 und 30° mit der Unterseite des unteren Querträgers (12) liegt, wobei die wenigstens eine abgeschrägte Ecke (17) so gestaltet ist, dass die Unterkante des entsprechenden seitlichen Pfostens (13) vertikal gegenüber der Unterseite des unteren Querträgers (12) um einen Abstand (E) zwischen 5 und 20 mm versetzt ist.

2. Vorrichtung nach Anspruch 1, **dadurch gekennzeichnet, dass** der Abstand (e) zwischen 10 und 15 mm beträgt.

3. Vorrichtung nach einem der Ansprüche 1 oder 2, **dadurch gekennzeichnet, dass** der Neigungswinkel (θ) zwischen 10 und 20° liegt.

4. Vorrichtung nach einem der Ansprüche 1 bis 3, **dadurch gekennzeichnet, dass** die beiden unteren Ecken (17) des Umfangsrahmens (10) abgeschrägt sind.

5. Vorrichtung nach einem der Ansprüche 1 bis 4, **dadurch gekennzeichnet, dass** sie ein weiteres Regelmodul (20) aufweist, das von dem Umfangsrahmen (10) getragen wird und dazu vorgesehen ist, vertikal über dem Balken (3A) der oberen Stoßfängerverstärkung (3) gegenüber dem Lufteinlass des Fahrzeugs auf der oberen Fahrspur angeordnet zu werden.

6. Vorrichtung nach Anspruch 5, **dadurch gekennzeichnet, dass** der Umfangsrahmen (10) eine Bodenwand (15) aufweist, die sich seitlich zwischen den hinteren Kanten der Seitenpfosten (13, 14) und vertikal zwischen den Modulen (20, 30) erstreckt.

7. Vorrichtung nach einem der Ansprüche 1 bis 6, **dadurch gekennzeichnet, dass** der Umfangsrahmen (10) aus einem einstückigen Formteil aus einem thermoplastischen Material hergestellt ist, das gegebenenfalls mit natürlichen und/oder synthetischen Fasern verstärkt ist.

8. Kraftfahrzeug mit einem sich vor zwei seitlichen Wiegenverlängerungen (5) erstreckenden unteren Stoßfängerversteifungsbalken (2A), einem sich vor zwei seitlichen Schenkeln (6) erstreckenden oberen Stoßfängerversteifungsbalken (3A), einer Kühlkassette (4), die von einem sich zwischen den seitlichen Wiegenverlängerungen (5) erstreckenden unteren Stützbalken (7) getragen wird, und einer in Längsrichtung zwischengeschalteten gesteuerten Steuervorrichtung für den Zuluftstrom (1) zwischen den Balken (2A, 3A) und der Kühlkassette (7); **dadurch gekennzeichnet, dass** die gesteuerte Steuervorrichtung für den ankommenden Kühlluftstrom (1) einem der Ansprüche 1 bis 7 entspricht.

## Claims

1. Device for the controlled regulation of the incoming cooling air flow (1) for a motor vehicle, intended to be inserted longitudinally between, on the one hand, the beams (2A, 3A) of the lower (2) and upper (3) bumper reinforcements and, on the other hand, the cooling cassette (4) of said motor vehicle, said device (1) comprising a peripheral frame of rectangular shape (10) defined by an upper crossmember (11), a lower crossmember (12) and two lateral uprights (13, 14), as well as at least one regulation module (30) supported by said peripheral frame (10) and designed to be arranged vertically between said beams (2A, 3A) facing the low-way air entry of the motor vehicle, the at least said regulation module (32) comprising a plurality of flaps, 33) mounted so as to pivot about parallel axes between a closure position and an opening position as well as order means (34) for displacing said flaps (32, 33) between these two positions; **characterised in that** at least one (17) of the lower corners of said peripheral frame (10) is bevelled along an inclined plane forming an angle of inclination (θ) which is between 10 and 30° with the lower face of said lower cross-member (12), the at least said bevelled corner (17) being configured so that the lower edge of the corresponding lateral upright (13) is offset vertically with respect to the lower face of said lower cross-member (12) by a spacing (e) of between 5 and 20 millimetres.

2. Device according to Claim 1, **characterised in that** said spacing (e) is between 10 and 15 millimetres.

3. Device according to one of Claims 1 or 2, **characterised in that** said angle of inclination (θ) is between 10 and 20°.

4. Device according to one of Claims 1 to 3, **characterised in that** the two lower corners (17) of said peripheral frame (10) are bevelled.

5. Device according to one of Claims 1 to 4, **characterised in that** it comprises another regulation module (20) supported by said peripheral frame (10) and designed to be arranged vertically above the beam (3A) of the upper bumper reinforcement (3) facing the upper track air entry of the vehicle.

6. Device according to claim 5, wherein said peripheral frame (10) comprises a bottom wall (15) extending laterally between the rear edges of said lateral uprights (13, 14) and vertically between said modules (20, 30).

7. Device according to one of Claims 1 to 6, **characterised in that** said peripheral frame (10) is moulded in a single component from a thermoplastic material optionally reinforced with natural and/or synthetic fibres.

8. Motor vehicle comprising a lower bumper reinforcement beam (2) extending in front of two lateral cradle extensions (5), an upper bumper reinforcement beam (3) extending in front of two lateral stretchers (6), a cooling cassette (4) supported by a lower supporting cross-member (7) extending between said lateral cradle extensions (5), and a device for controlled regulation of the incoming cooling air flow (1) inserted longitudinally between said beams (2 A, 3 A) and said cooling cassette (7); wherein said device for controlled regulation of the incoming cooling air flow (1) is in accordance with one of Claims 1 to 7.
